# EUROPEAN PATENT SPECIFICATION

(11) **EP 2 029 378 B1**
(45) Date of publication and mention of the grant of the patent: **19.01.2011**
(21) Application number: 07726056.0
(22) Date of filing: 18.06.2007
(51) Int. Cl.: B60H 1/00, B60H 3/00

(54) **SANITIZING AND COOLING APPARATUS PARTICULARLY FOR MOTOR VEHICLE CABINS**
DESINFIZIER- UND KÜHLVORRICHTUNG, BESONDERS FÜR KRAFTFAHRZEUGFAHRERHÄUSER
APPAREIL DE DESINFECTION ET DE REFROIDISSEMENT DESTINE PARTICULIEREMENT AUX CABINES DE VEHICULES À MOTEUR

(30) Priority: 21.06.2006 IT VI20060191
(43) Date of publication of application: 04.03.2009
(73) Proprietor: Concina, Pierpaolo, 36021 Villaga (IT)
(72) Inventor: Concina, Pierpaolo, 36021 Villaga (IT)
(74) Representative: Forattini, Amelia
(86) International application number: PCT/EP2007/005348
(87) International publication number: WO 2007/147545

(56) References cited:
- WO-A-01/52674
- US-A- 5 078 046
- US-A- 5 167 129
- US-A1- 2003 077 997
- US-B1- 6 544 116
- US-B1- 6 758 739

## Description

The present invention relates to a sanitizing and cooling apparatus particularly for motor vehicle cabins, suitable for all kinds of motor vehicle.

As is known, in contrast with the general trend which constantly seeks to preserving the health of non-smokers against the consequences of passive smoking, which has been expressed juridically with appropriately provided statutory provisions and applied in practice with increasingly modern and efficient air-purifiers to be installed in the various enclosed spaces, for motor vehicles no valid solution in this regard seems to have been proposed. The only real possibility currently offered to habitual smokers, besides of course choosing not to smoke inside the motor vehicle cabin, is to leave the windows slightly open so as to produce a rapid replacement of the air, due mostly to the suction caused by the Venturi effect. A possible variation to this solution consists in slightly opening the sunroof, if provided on the vehicle.

This type of solution in practice has many problems, linked first of all to a considerable reduction in the comfort that the cabin of a motor vehicle should ensure. A first aspect to be considered relates to the at least partial neutralization of the action of the air-conditioning unit, with a consequent useless energy expenditure. Another no less important inconvenience is linked to the considerable loss of soundproofing that occurs in a motor vehicle cabin when the windows or the sunroof are opened, even at low speeds of the vehicle.

Regarding the protection of the health of passengers, it must be noted that little importance is given in the prior art also to the prevention of kinetosis, i.e., so-called car sickness. This problem, which is very frequent especially in children, is due to a hypersensitivity of the vestibular system, i.e., of the balance center located in the inner ear, and occurs as a series of symptoms which begin with a state of general discomfort, accompanied by paling, cold sweat and anxiety, and culminate with nausea and vomiting. To prevent or attenuate the discomfort described above, it is good practice to avoid or reduce, during travel, additional factors of discomfort such as smoke and stale air inside the motor vehicle cabin, ensuring continuous air replacement. In this case also, as for passive smoking, the only solution is to open slightly the windows or sunroof, if available, with all the drawbacks already mentioned earlier.

Replacement of the air inside the motor vehicle cabin has a fundamental role also for the active safety of motor vehicles, because safety is greatly affected by the physical performance of the driver, whose degree of attention must be such as to ensure prompt neuromuscular responses to external stimuli. In particular, replacement of the air in the motor vehicle cabin is required by the alveolar ventilation of the driver and of the passengers to avoid the phenomenon of rebreathing, i.e., of breathing again the previously ventilated carbon dioxide. This circumstance induces drowsiness, headaches and torpor, and in combination with other factors, such as cigarette smoke, can lead to hypoxygenation phenomena, which become apparent with a state of general ill-being and diplopia. The reduction in neuromuscular responses can be further aggravated by ethyl gas, which is released into the motor vehicle cabin due to the alveolar ventilation of individuals intoxicated by alcohol and, through rebreathing, maintains the blood alcohol level in intoxicated individuals and generates one in sober individuals if effective air replacement is unavailable.

Another field in which currently available motor vehicle accessories seem to be still greatly inadequate relates to the possibility of controlling the internal temperature of the cabins of parked vehicles, that are subjected to intense radiation particularly during the summer period. The solutions proposed so far are all based exclusively on introducing climate-controlled air or more simply air at ambient temperature into the cabin of the parked vehicle. Whereas the first case involves the entire air-conditioning system, which is made to run by means of the energy produced by a photovoltaic panel or supplied by an auxiliary battery, the second case uses only the fan of the system and simply blows air drawn from outside into the cabin.

A first drawback of those temperature control systems is their poor efficiency, i.e., the low ratio between the resulting benefit and the required energy expenditure. It must in fact be noted that while the intervention of an air-conditioning unit can produce more than satisfactory effects on the reduction of the temperature of an enclosed space, on the other hand it requires a considerable energy supply, which a photovoltaic source or a battery installed on a motor vehicle are able to provide only for very limited periods.

US-A-5167129 discloses an automotive air conditioning system which also effects some air ventilation in the vehicle.

WO-01/52674 discloses a device for removing or reducing smoke in a vehicle cabin.

The aim of the present invention is to solve the problems described above, by providing a sanitizing and cooling apparatus, particularly for motor vehicle cabins, which can be used both to aspirate any smoke that is present within the cabin of a motor vehicle and to reduce, during parking, the internal temperature of the cabin, performing simultaneously two particularly useful functions.

Within the scope of this aim, an object of the invention is to provide a sanitizing and cooling apparatus which allows to reduce the effect of passive smoking in a motor vehicle cabin, keeping the air constantly clean without the need to open the windows or sunroof, in accordance with the most recent and strict anti-smoking regulations.

Another object of the invention is to provide a sanitizing and cooling apparatus which allows to sanitize the entire motor vehicle cabin and the air-conditioning system so as to eliminate bacteria, molds and other microorganisms and create a healthier condition.

Another object of the invention is to provide a sanitizing and cooling apparatus which attenuates the effect of kinetosis, contrasting the factors that unleash it.

Another object of the invention is to provide a sanitizing and cooling apparatus which, by ensuring effective air replacement, allows to avoid the phenomenon of rebreathing, helping to increase considerably the active safety of motor vehicles.

Another object of the invention is to provide a sanitizing and cooling apparatus which protects from the degradation caused by thermal variations the interiors of a motor vehicle and reduces the duration of the cycle for cooling the motor vehicle cabin after starting, avoiding the unpleasant accumulation of hot air in the ducts of the air-conditioning system.

Another object of the invention is to provide a sanitizing and cooling apparatus which eliminates smoke from the cabin of a vehicle, protecting the air-conditioning system and the soundproofing and avoiding deposits of condensed smoke on windows, upholstery and clothing.

Another object of the invention is provide a sanitizing and cooling apparatus which is simple to provide and can be manufactured at competitive costs, so much that it can be installed as an accessory in all kinds of motor vehicle cabin.

This aim and these and other objects, which will become better apparent hereinafter, are achieved by a sanitizing and cooling apparatus particularly for a motor vehicle cabin, as claimed in the appended claims.

Further characteristics and advantages of the invention will become better apparent from the following detailed description of a preferred but not exclusive embodiment of a sanitizing and cooling apparatus according to the invention, illustrated by way of nonlimiting example in the accompanying drawings, wherein:

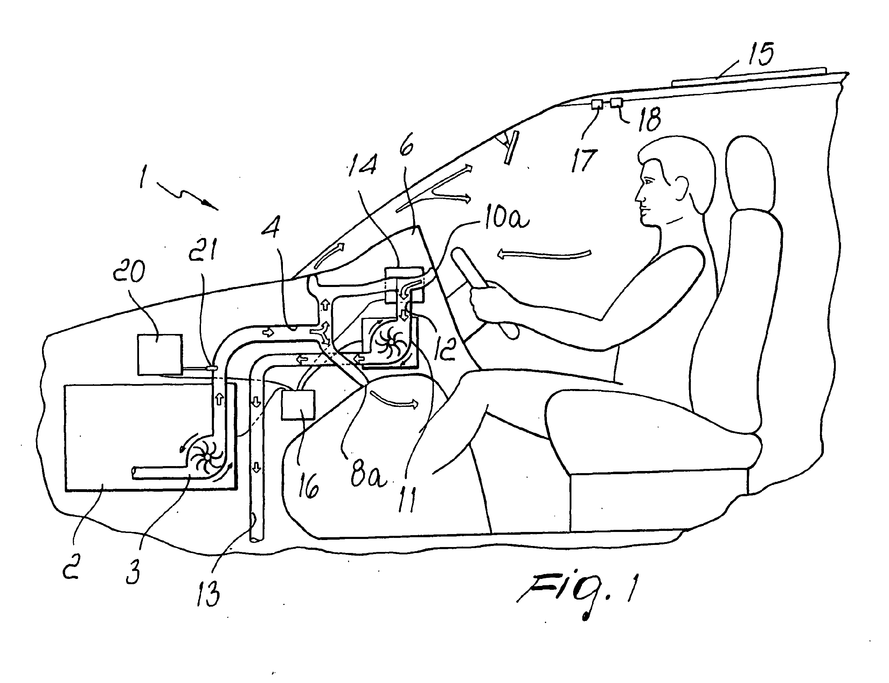

Figure 1 is a partially sectional schematic side view of a sanitizing and cooling apparatus according to the invention, installed in a motor vehicle;

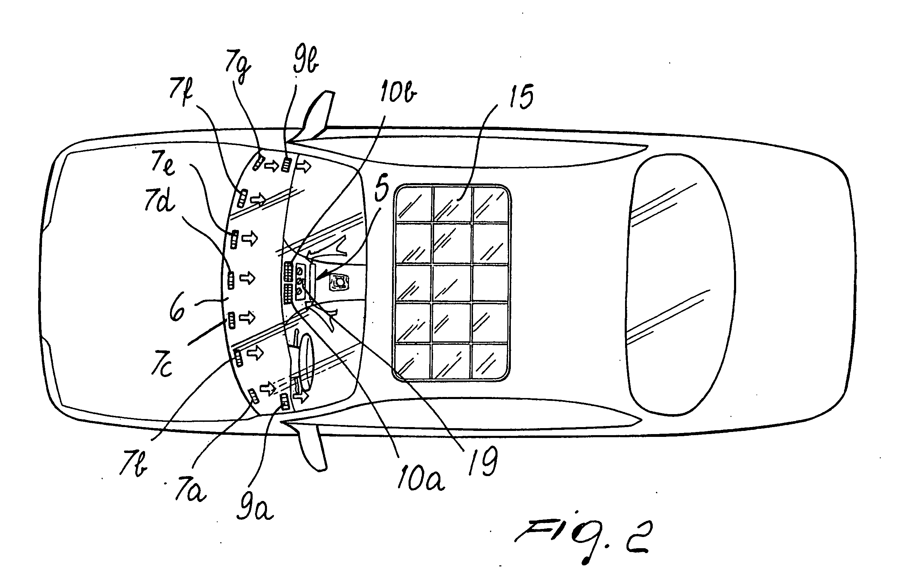

Figure 2 is a top view of a motor vehicle provided with a, non claimed, sanitizing and cooling apparatus during its operation;

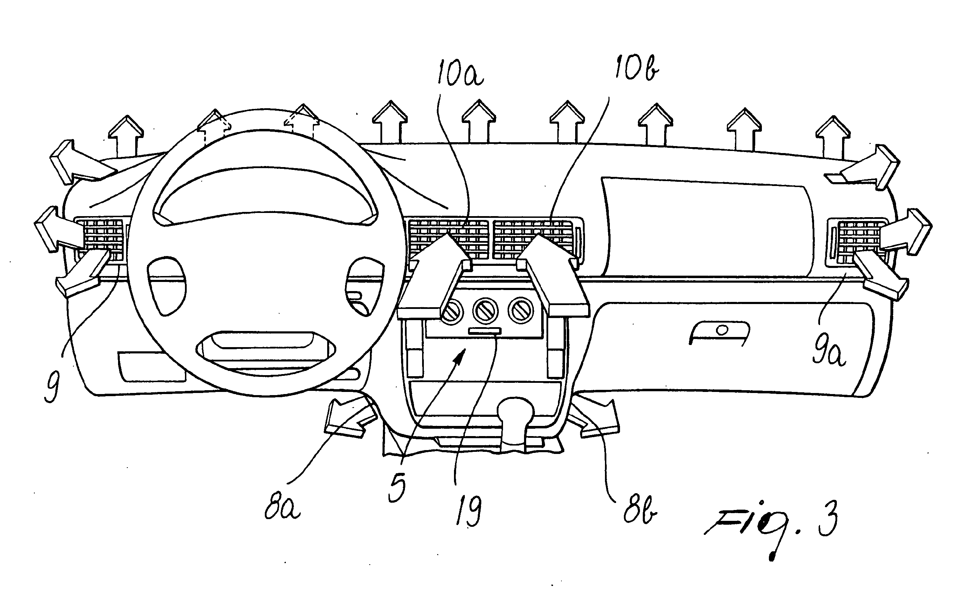

Figure 3 is a front view of the dashboard of a motor vehicle provided with a sanitizing and cooling apparatus according to the invention, during its operation;

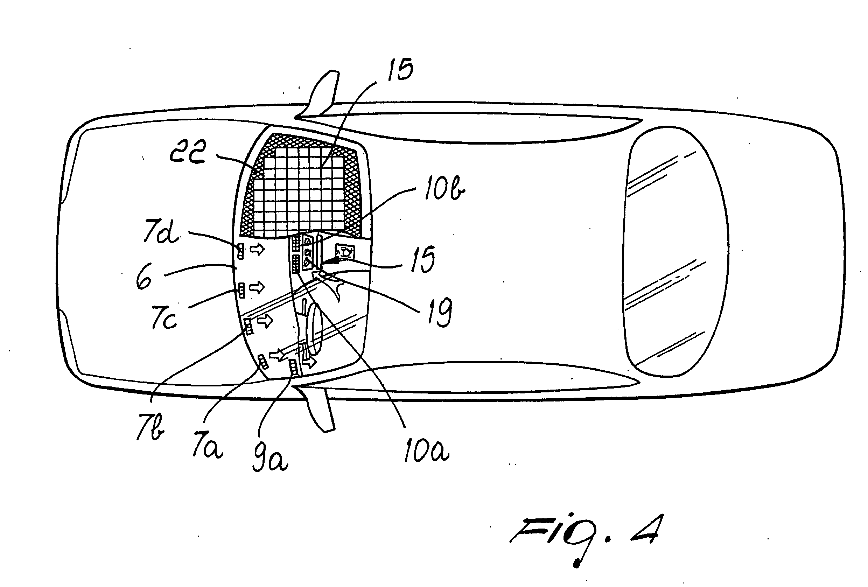

Figure 4 is a top view of a motor vehicle provided with a sanitizing and cooling apparatus equipped with a sunshade, during its operation.

With reference to the cited figures, a sanitizing and cooling apparatus particularly for motor vehicle cabins, generally designated by the reference numeral 1, comprises an air-conditioning system for motor vehicles which is constituted by a ventilation and air-conditioning device 2 which is provided with a fan 3 and is joined to a plurality of main ducts 4, that generally branch in the forward region of the cabin of a vehicle. The main ducts 4 comprise a plurality of flow redirection devices, generally actuated by electrohydraulic actuators that can be controlled by means of selection knobs 5, or by means of buttons for selecting preset air-conditioning conditions, for distributing the stream of air generated by the ventilation and air-conditioning device 2, or more simply the stream that arrives from outside, toward vents. In the specific case, the vents usually include a plurality of upper vents 7a, 7b, 7c, 7d, 7e, 7f and 7g, that are arranged above a dashboard 6 of the motor vehicle proximate to the windscreen, two lower vents 8a and 8b, that are arranged below the dashboard 6 proximate to the foot space, two side vents 9a and 9b that are arranged at the right and left ends of the dashboard 6, and two central vents 10a and 10b, that are arranged centrally with respect to the dashboard 6 proximate to the control console. In some vehicles, the main ducts 4 can also extend into the lower region of the cabin, with branches that are not shown in the accompanying figures.

According to the invention, the sanitizing and cooling apparatus 1 comprises an air extraction and sanitizing means, which is joined to the main ducts 4 so as to be able to work by cooperating with the ventilation and air-conditioning device 2 and with the flow redirection devices. In particular, the extraction and sanitizing means comprises at least one extractor 11, which is accommodated in the engine compartment or inside the dashboard 6, depending on the requirements and on the space available, and is connected on its intake side to the main ducts 4 and on its discharge side to the outside atmosphere, respectively by an extraction duct 12 and by a discharge duct 13. A flow redirection device 14 is installed on the extraction duct 12 and in normal operating conditions allows to isolate the extractor 11 from the original air-conditioning system.

The sanitizing and cooling apparatus 1 is powered by an electric power supply module, which is formed by an auxiliary electric battery, not shown in the accompanying figures, or as an alternative by the service battery of the vehicle, and by a photovoltaic panel 15, which in addition to recharging the batteries allows the operation of the entire apparatus even when the vehicle is switched off.

The photovoltaic panel 15 is applied to a sunshade 22 and wired to the electrical system for example by means of the cigarette lighter connector. In this manner, the sunshade 22, which is retractably integrated into the structure of the vehicle, in addition to protecting against solar radiation and from the generation of heat through the glazed surfaces, provides the power supply and recharging functions described earlier. The retractable integration of the sunshade 22, which can optionally be motorized, may be obtained by making the sunshade slide on a pair of guides provided on two opposite sides of the windshield and by subsequently accommodating it in a compartment or by rolling it up onto a roller which is concealed from sight.

The possibility to slidingly extract even just a portion of the sunshade 22 and of the associated photovoltaic panel 15 from the compartment interposed between the roof of the vehicle and the ceiling of the cabin, allows to eliminate sun visors and to use instead the sunshade 22 and the photovoltaic panel 15, that, because of their uniform structure and their ability to finely adjust the portion of windshield that is shielded in each instance, allow to eliminate any unwanted glimmer and suppress any unpleasant reflection. This arrangement also increases the passive safety of the vehicle, because in case of collision, the sun visors are potential sources of injury for the occupants. Safety is further increased by the presence of a retention means which, in the absence of a specific release command, retains the sunshade 22 and the accompanying photovoltaic panel 15, preventing their fortuitous extraction.

The entire sanitizing and cooling apparatus 1 is actuated by a control means 16, which manages the electric power supply module and makes the extractor 11 and the flow redirection device 14 interact with the original air-conditioning system. In particular, the control means 16 is capable of optimizing the endurance of the sanitizing and cooling apparatus 1 by adjusting its absorption as a function of the energy generated by the photovoltaic panel 15 and of the energy available in the batteries; moreover, they include an automatic power-off device, which is adapted to interrupt the operation of the sanitizing and cooling apparatus 1 if, when the vehicle is off, the charging level of the service battery drops until it reaches a threshold limit for allowing to restart the vehicle regularly, and moreover they are provided with one or more temperature sensors 17 and one or more smoke detectors 18, arranged inside the cabin, in order to activate automatically the sanitizing and cooling apparatus 1. As an alternative, for manual activation it is possible to resort to the button 19.

In order to complete the action of the sanitizing and cooling apparatus 1 there is also an automatic rechargeable atomizer 20, which is adapted to spray a dose of sanitizing product inside the main ducts 3. The sanitizing product is subsequently conveyed into the cabin. In the specific case, the automatic rechargeable atomizer 20, which is accommodated in the engine compartment or inside the dashboard 6 so as to be easily accessible for the intervention for replacing the refill, is connected to a nozzle 21 which is arranged proximate to the discharge duct of the fan 3.

The operation of the sanitizing and cooling apparatus according to the invention is as follows.

According to a first possible method of operation, in which the vehicle is traveling, any accumulation of smoke inside the cabin activates the smoke detector 18, which reports its presence to the control means 16, which activates the extractor 11 and controls the flow redirection device 14. In particular, before activating the extractor 11, which in this condition is powered by the service battery of the vehicle, the control means 16 connects the extraction duct 12 to the central vents 10, in practice isolating them from the rest of the air-conditioning system, which continues to introduce conditioned air into the cabin through the upper vents 7, the lower vents 8 and the lateral vents 9. In this manner, the smoke, which tends to accumulate in the upper region of the cabin, is aspirated by the extractor 11 and expelled outside through the discharge duct 13. When the smoke inside the cabin has been extracted completely, or in any case when its concentration has been reduced below a preset value, the smoke detector 18 deactivates automatically and the control means 16 switches off the extractor 11. Before reconnecting the central vents 10 to the rest of the air-conditioning system, in this case isolating them from the extraction duct 12, the control means 16 activates the automatic atomizer 20 which, by means of the nozzle 21, introduces a dose of sanitizing product into the main ducts 4, applying a disinfectant and deodorizing action which propagates to the entire cabin by the action of the fan 3.

If it is necessary to start or end the operations described above by excluding the action of the smoke detector 18, or by simply anticipating it, it is possible to use the button 19, which allows both to activate manually the extractor 11 and to actuate appropriately the flow redirection unit 14. This prerogative allows for example to contrast or considerably alleviate the effects of kinetosis and in fact allows to use the air-conditioning system of vehicles simultaneously with the sanitizing and cooling apparatus 1, which aspirates the stale air with the extractor 11 and expels it outside through the discharge duct 13, thus ensuring a continuous and considerable replacement of the air reducing the additional factors of discomfort during travel.

The sanitizing and cooling apparatus 1 can also be used to perform a specific sanitizing of the cabin if passengers are not on board the vehicle. In particular, the control means 16 can activate the automatic atomizer 20 so as to introduce in the cabin, through the nozzle 21, a calibrated dose of sanitizing product which, in order to optimize its effect and extend its action also to the entire ventilation and air-conditioning device 2, is diffused uniformly, utilizing both the fan 3 and the recirculation function of the air-conditioning system. Sanitizing ends with the intervention of the extractor 11 which, after a preset time, changes the air that is present in the cabin, restoring the optimum conditions for the passengers.

According to another possible method of operation, in which the vehicle is switched off and parked, solar radiation produces inside it a temperature increase which activates the temperature sensor 17, which reports its status to the control means 16, which activates both the fan 3 and the extractor 11 and controls the flow redirection device 14. As previously described, before activating the extractor 11, which in this case is powered by the additional electric battery or by the photovoltaic panel 15, the control means 16 connects the extraction duct 12 to the central vents 10, isolating them from the rest of the air-conditioning system and allowing the extractor 11 to aspirate the warm air that has accumulated inside the cabin, which tends to stagnate in the region proximate to the roof, expelling it outside through the discharge duct 13 and replacing it indirectly both with the air that arrives from outside through the compensation holes and with the air introduced by the fan 3. When the internal temperature of the cabin has been lowered below a selected value, the temperature sensor 17 is automatically deactivated and the control means 16 switches off the extractor 11 and reconnects the central vents 10 to the rest of the air-conditioning system, isolating them from the extraction duct 12. The replacement of the air that is present in the cabin is increased by the action of the fan 3, which is used simultaneously with the extractor 11 which, by being powered by the additional electric battery or by the photovoltaic panel 15, introduces fresh air into the cabin, which air arrives from outside through the upper vents 7, the lower vents 8 and the side vents 9.

If the action of the sanitizing and cooling apparatus 1 might compromise in any way the subsequent regular operation of the vehicle, the automatic shutdown device would be activated, interrupting its operation before reaching a limit safety threshold.

In practice it has been found that the sanitizing and cooling apparatus according to the invention fully achieves the intended aim and objects, since it can be used both to aspirate any smoke that is present in the cabin of a motor vehicle and to lower the internal temperature thereof.

In particular, the sanitizing and cooling apparatus according to the invention allows to ensure effective air replacement, avoiding the phenomenon of rebreathing and reducing both the symptoms of kinetosis and the effect of passive smoking inside a motor vehicle cabin, in addition to avoiding deposits of condensed smoke on windows, upholstery and clothing, keeping the air constantly clean without the need to open the windows or sunroof, preserving the air conditioning and the soundproofing.

The sanitizing and cooling apparatus according to the invention, in addition to protecting against solar radiation and against the generation of heat through the glazed surfaces, reduces the duration of the cooling cycle of the cabin, avoiding the unpleasant accumulation of hot air in the ducts of the air-conditioning system, and can be installed as an accessory in all kinds of motor vehicle.

Finally, the sanitizing and cooling apparatus according to the invention allows to sanitize the motor vehicle cabin and the air-conditioning system, creating a healthier condition.

## Claims

1. A sanitizing and cooling apparatus particularly for a motor vehicle cabin, comprising a ventilation and air-conditioning device (2) connected to a plurality of main ducts (4) provided with vents (7a, 7b, 7c, 7d, 7e, 7f, 7g, 8a, 8b, 9a, 9b, 10a, 10b) and comprising a plurality of flow redirection devices; an extraction and sanitizing means which is connected to said plurality of main ducts and cooperates with said ventilation and air-conditioning device (2) and with said flow redirection devices; said extraction and sanitizing means comprises at least one extraction device (11), which is joined to said plurality of main ducts; said extraction and sanitizing means comprises at least one extraction duct (12), which connects said extraction device to said plurality of main ducts; said extraction and sanitizing means comprises at least one discharge duct (13) which connects said extraction device to the outside of said cabin; said extraction and sanitizing means comprises at least one flow redirection device (14), which is interposed between some of said vents, said extraction duct (12) and said plurality of main ducts; said apparatus comprises at least one electric power supply module; said apparatus being **characterized in that** said electric power supply module comprises at least one photovoltaic panel (15); said photovoltaic panel (15) is associated with the structure of said vehicle; said photovoltaic panel (15) is joined to a sunshade (22) which is integrated so that it can retract within the structure of said vehicle.

2. The sanitizing and cooling apparatus according to claim 1, **characterized in that** said extraction and sanitizing means comprises a control means (16) which is wired to said extraction device (11), to said flow redirection device (14) and to said ventilation and air-conditioning device (2).

3. The sanitizing and cooling apparatus according to one or more of the preceding claims, **characterized in that** said electric power supply module comprises at least one auxiliary electric battery.

4. The sanitizing and cooling apparatus according to one or more of the preceding claims, **characterized in that** said sunshade (22) comprises two guides, formed on opposite sides of the windscreen of said vehicle in order to guide the sliding of said sunshade.

5. The sanitizing and cooling apparatus according to one or more of the preceding claims, **characterized in that** said sunshade (22) comprises a compartment which is formed inside said vehicle in order to accommodate said sunshade.

6. The sanitizing and cooling apparatus according to one or more of the preceding claims, **characterized in that** said sunshade (22) comprises a roller, which is contained inside said compartment in order to roll up said sunshade.

7. The sanitizing and cooling apparatus according to one or more of the preceding claims, **characterized in that** said extraction and sanitizing means comprises at least one temperature sensor (17) which is connected to said control means (16).

8. The sanitizing and cooling apparatus according to one or more of the preceding claims, **characterized in that** said extraction and sanitizing means comprises at least one smoke detector (18) which is connected to said control means (16).

9. The sanitizing and cooling apparatus according to one or more of the preceding claims, **characterized in that** said extraction and sanitizing means comprises at least one automatic atomizer (20) which is wired to said control means (16) and interacts with a nozzle (21) which is joined to said plurality of main ducts.

10. The sanitizing and cooling apparatus according to one or more of the preceding claims, **characterized in that** said vents comprise a plurality of upper vents (7a, 7b, 7c, 7d, 7e, 7f, 7g) which are formed on the dashboard (6) of a vehicle proximate to the windscreen.

11. The sanitizing and cooling apparatus according to one or more of the preceding claims, **characterized in that** said vents comprise a plurality of lower vents (8a, 8b) formed at the foot space of said vehicle.

12. The sanitizing and cooling apparatus according to one or more of the preceding claims, **characterized in that** said vents comprise a plurality of side vents (9a, 9b) formed at the right and left ends of said dashboard (6).

13. The sanitizing and cooling apparatus according to one or more of the preceding claims, **characterized in that** said vents comprise at least one central vent (10a, 10b) which is formed centrally with respect to said dashboard (6).

14. The sanitizing and cooling apparatus according to one or more of the preceding claims, **characterized in that** said extraction and sanitizing means comprises an automatic power-off device.

## Patentansprüche

1. Desinfektions- und Kühlungsvorrichtung, insbesondere für eine Kraftfahrzeugfahrgastzelle, mit einer Lüftungs- und Klimatisierungsvorrichtung (2), die mit mehreren Hauptrohrleitungen (4) verbunden ist, die mit Lüftungsauslässen (7a, 7b, 7c, 7d, 7e, 7f, 7g, 8a, 8b, 9a, 9b, 10a, 10b) versehen sind und mehrere Strömungsumlenkvorrichtungen aufweisen; ein Extraktions- und Desinfektionsmittel, das mit den mehreren Hauptrohrleitungen verbunden ist und mit der Lüftungs- und Klimatisierungsvorrichtung (2) und mit den Strömungsumlenkvorrichtungen zusammenwirkt; wobei das Extraktions- und Desinfektionsmittel wenigstens eine Extraktionsvorrichtung (11) enthält, die mit den mehreren Hauptrohrleitungen verbunden ist; wobei das Extraktions- und Desinfektionsmittel wenigstens eine Extraktionsrohrleitung (12) aufweist, die die Extraktionsvorrichtung mit den mehreren Hauptrohrleitungen verbindet; wobei das Extraktions- und Desinfektionsmittel wenigstens eine Entleerungsrohrleitung (13) enthält, die die Extraktionsvorrichtung mit der äußeren Umgebung der Fahrgastzelle verbindet; wobei das Extraktions- und Desinfektionsmittel wenigstens eine Strömungsumlenkvorrichtung (14) aufweist, die zwischen einige der Lüftungsauslässe, die Extraktionsrohrleitung (12) und die mehreren Hauptrohrleitungen eingefügt ist;
wobei die Vorrichtung wenigstens ein Stromversorgungsmodul enthält; wobei die Vorrichtung **dadurch gekennzeichnet ist, dass** das Stromversorgungsmodul wenigstens eine photovoltaische Platte (15) enthält; wobei die photovoltaische Platte (15) mit dem Aufbau des Fahrzeuges verbunden ist; wobei die photovoltaische Platte (15) mit einer Sonnenblende (22) verbunden ist, die in der Weise integriert ist, dass sie in den Aufbau des Fahrzeugs zurückgezogen werden kann.

2. Desinfektions- und Kühlungsvorrichtung nach Anspruch 1, **dadurch gekennzeichnet, dass** das Extraktions-und Desinfektionsmittel ein Steuermittel (16) enthält, das mit der Extraktionsvorrichtung (11), mit der Strömungsumlenkvorrichtung (14) und mit der Lüftungs- und Klimatisierungsvorrichtung (2) verdrahtet ist.

3. Desinfektions- und Kühlungsvorrichtung nach einem oder mehreren der vorhergehenden Ansprüche, **dadurch gekennzeichnet, dass** das Stromversorgungsmodul wenigstens eine elektrische Hilfsbatterie enthält.

4. Desinfektions- und Kühlungsvorrichtung nach einem oder mehreren der vorhergehenden Ansprüche, **dadurch gekennzeichnet, dass** die Sonnenblende (22) zwei Führungen aufweist, die auf gegenüberliegenden Seiten der Windschutzscheibe des Fahrzeugs ausgebildet sind, um das Gleiten der Sonnenblende zu führen.

5. Desinfektions- und Kühlungsvorrichtung nach einem oder mehreren der vorhergehenden Ansprüche, **dadurch gekennzeichnet, dass** die Sonnenblende (22) ein Fach aufweist, das in dem Fahrzeug ausgebildet ist, um die Sonnenblende aufzunehmen.

6. Desinfektions- und Kühlungsvorrichtung nach einem oder mehreren der vorhergehenden Ansprüche, **dadurch gekennzeichnet, dass** die Sonnenblende (22) eine Rolle aufweist, die in dem Fach enthalten ist, um die Sonnenblende aufzurollen.

7. Desinfektions- und Kühlungsvorrichtung nach einem oder mehreren der vorhergehenden Ansprüche, **dadurch gekennzeichnet, dass** das Extraktions- und Desinfektionsmittel wenigstens einen Temperatursensor (17) enthält, der mit dem Steuermittel (16) verbunden ist.

8. Desinfektions- und Kühlungsvorrichtung nach einem oder mehreren der vorhergehenden Ansprüche, **dadurch gekennzeichnet, dass** das Extraktions- und Desinfektionsmittel wenigstens einen Rauchdetektor (18) enthält, der mit dem Steuermittel (16) verbunden ist.

9. Desinfektions- und Kühlungsvorrichtung nach einem oder mehreren der vorhergehenden Ansprüche, **dadurch gekennzeichnet, dass** das Extraktions- und Desinfektionsmittel wenigstens einen automatischen Zerstäuber (20) enthält, der mit dem Steuermittel (16) verdrahtet ist und mit einer Düse (21), die mit den mehreren Hauptrohrleitungen verbunden ist, in Wechselwirkung steht.

10. Desinfektions- und Kühlungsvorrichtung nach einem oder mehreren der vorhergehenden Ansprüche, **dadurch gekennzeichnet, dass** die Lüftungsauslässe mehrere obere Lüftungsauslässe (7a, 7b, 7c, 7d, 7e, 7f, 7g) aufweisen, die im Armaturenbrett (6) eines Fahrzeugs in der Nähe der Windschutzscheibe ausgebildet sind.

11. Desinfektions- und Kühlungsvorrichtung nach einem oder mehreren der vorhergehenden Ansprüche, **dadurch gekennzeichnet, dass** die Lüftungsauslässe mehrere untere Lüftungsauslässe (8a, 8b) aufweisen, die im Fußraum des Fahrzeugs ausgebildet sind.

12. Desinfektions- und Kühlungsvorrichtung nach einem oder mehreren der vorhergehenden Ansprüche, **dadurch gekennzeichnet, dass** die Lüftungsauslässe mehrere seitliche Lüftungsauslässe (9a, 9b) aufweisen, die am rechten Ende und am linken Ende des Armaturenbretts (6) ausgebildet sind.

13. Desinfektions- und Kühlungsvorrichtung nach einem oder mehreren der vorhergehenden Ansprüche, **dadurch gekennzeichnet, dass** die Lüftungsauslässe wenigstens einen mittigen Lüftungsauslass (10a, 10b) aufweisen, der in der Mitte des Armaturenbretts (6) ausgebildet ist.

14. Desinfektions- und Kühlungsvorrichtung nach einem oder mehreren der vorhergehenden Ansprüche, **dadurch gekennzeichnet, dass** das Extraktions- und Desinfektionsmittel eine automatische Leistungsabschaltvorrichtung enthält.

## Revendications

1. Appareil de désinfection et de refroidissement en particulier pour une cabine de véhicule à moteur, comprenant un dispositif de ventilation et de conditionnement d'air (2) raccordé à une pluralité de conduits principaux (4) munis d'évents (7a, 7b, 7c, 7d, 7e, 7f, 7g, 8a, 8b, 9a, 9b, 10a, 10b) et comprenant une pluralité de dispositifs de réorientation de l'écoulement ; un moyen d'extraction et de désinfection qui est raccordé à ladite pluralité de conduits principaux et coopère avec ledit dispositif de ventilation et de conditionnement d'air (2) et avec lesdits dispositifs de réorientation de l'écoulement ; dans lequel ledit moyen d'extraction et de désinfection comprend au moins un dispositif d'extraction (11), qui est joint à ladite pluralité de conduits principaux ; ledit moyen d'extraction et de désinfection comprend au moins un conduit d'extraction (12), qui raccorde ledit dispositif d'extraction à ladite pluralité de conduits principaux ; ledit moyen d'extraction et de désinfection comprend au moins un conduit de décharge (13) qui raccorde ledit dispositif d'extraction à l'extérieur de ladite cabine ; ledit moyen d'extraction et de désinfection comprend au moins un dispositif de réorientation de l'écoulement (14), qui est intercalé entre certains desdits évents, ledit conduit d'extraction (12) et ladite pluralité de conduits principaux ; ledit appareil comprenant au moins un module d'alimentation en énergie électrique ; ledit appareil étant **caractérisé en ce que** ledit module d'alimentation en énergie électrique comprend au moins un panneau photovoltaïque (15) ; ledit panneau photovoltaïque (15) est associé à la structure dudit véhicule ; et ledit panneau photovoltaïque (15) est joint à un pare-soleil (22) qui est intégré de manière à pouvoir se rétracter dans la structure dudit véhicule.

2. Appareil de désinfection et de refroidissement selon la revendication 1, **caractérisé en ce que** ledit moyen d'extraction et de désinfection comprend un moyen de commande (16) qui est connecté par câble audit dispositif d'extraction (11), audit dispositif de réorientation de l'écoulement (14) et audit dispositif de ventilation et de conditionnement d'air (2).

3. Appareil de désinfection et de refroidissement selon une ou plusieurs des revendications précédentes, **caractérisé en ce que** ledit module d'alimentation en énergie électrique comprend au moins une batterie électrique auxiliaire.

4. Appareil de désinfection et de refroidissement selon une ou plusieurs des revendications précédentes, **caractérisé en ce que** le pare-soleil (22) comprend deux guides, formés sur des côtés opposés du pare-brise dudit véhicule afin de guider le glissement dudit pare-soleil.

5. Appareil de désinfection et de refroidissement selon une ou plusieurs des revendications précédentes, **caractérisé en ce que** ledit pare-soleil (22) comprend un compartiment qui est formé à l'intérieur dudit véhicule pour loger ledit pare-soleil.

6. Appareil de désinfection et de refroidissement selon une ou plusieurs des revendications précédentes, **caractérisé en ce que** ledit pare-soleil (22) comprend un rouleau qui est confiné à l'intérieur dudit compartiment afin d'enrouler ledit pare-soleil.

7. Appareil de désinfection et de refroidissement selon une ou plusieurs des revendications précédentes, **caractérisé en ce que** ledit moyen d'extraction et de désinfection comprend au moins un capteur de température (17) qui est connecté audit moyen de commande (16).

8. Appareil de désinfection et de refroidissement selon une ou plusieurs des revendications précédentes, **caractérisé en ce que** ledit moyen d'extraction et de désinfection comprend au moins un détecteur de fumée (18) qui est connecté audit moyen de commande (16).

9. Appareil de désinfection et de refroidissement selon une ou plusieurs des revendications précédentes, **caractérisé en ce que** ledit moyen d'extraction et de désinfection comprend au moins un vaporisateur automatique (20) qui est connecté par câble audit moyen de commande (16) et interagit avec une buse (21) qui est jointe à ladite pluralité de conduits principaux.

10. Appareil de désinfection et de refroidissement selon une ou plusieurs des revendications précédentes, **caractérisé en ce que** lesdits évents comprennent une pluralité d'évents supérieurs (7a, 7b, 7c, 7d, 7e, 7f, 7g) qui sont formés sur le tableau de bord (6) d'un véhicule à proximité du pare-brise.

11. Appareil de désinfection et de refroidissement selon une ou plusieurs des revendications précédentes, **caractérisé en ce que** lesdits évents comprennent une pluralité d'évents inférieurs (8a, 8b) qui sont formés dans l'espace pour les pieds dudit véhicule.

12. Appareil de désinfection et de refroidissement selon une ou plusieurs des revendications précédentes, **caractérisé en ce que** lesdits évents comprennent une pluralité d'évents latéraux (9a, 9b) qui sont formés aux extrémités de droite et de gauche dudit tableau de bord (6).

13. Appareil de désinfection et de refroidissement selon une ou plusieurs des revendications précédentes, **caractérisé en ce que** lesdits évents comprennent au moins un évent central (10a, 10b) qui est formé au centre par rapport audit tableau de bord (6).

14. Appareil de désinfection et de refroidissement selon une ou plusieurs des revendications précédentes, **caractérisé en ce que** ledit moyen d'extraction et de désinfection comprend un dispositif automatique de coupure de l'alimentation électrique.
